# EUROPEAN PATENT APPLICATION

(11) **EP 2 096 338 A1**
(43) Date of publication of application: **02.09.2009**
(21) Application number: 07830938.2
(22) Date of filing: 31.10.2007
(51) Int. Cl.: F16J 15/06, B65D 88/74, B65D 90/02, F16B 37/14, F16J 15/10

(54) **CAP, DOUBLE-LAYER STRUCTURE PANEL, AND REFRIGERATING CONTAINER**

(30) Priority: 30.11.2006 JP 2006323267
(71) Applicant: Daikin Industries, Ltd., Osaka 530-8323 (JP)
(72) Inventor: IKEMIYA, Makoto, Sakai-shi Osaka 591-8511 (JP); KITAMURA, Yoshinori, Sakai-shi Osaka 591-8511 (JP); KAMEYAMA, Shouzou, Sakai-shi Osaka 591-8511 (JP)
(74) Representative: HOFFMANN EITLE
(86) International application number: PCT/JP2007/071204
(87) International publication number: WO 2008/065846

(57) **Abstract**

[PROBLEMS TO BE SOLVED] To prevent leakage of an interlayer material provided between panels and reduce the time and effort required for sealing gaps.

[MEANS FOR SOLVING THE PROBLEMS] A multi-layered panel wherein an interlayer material in a fluid state or in a solidified state transformed therefrom is provided between a pair of panels, comprises an internally-threaded member (30) fitted in a through-hole (16a) formed in an outer one (16) of the panels, and a cap (40) capped on the internally-threaded member (30). The cap (40) has a bottomed tubular-shaped body portion (41) adapted to be brought into close contact with an outer peripheral surface of the internally-threaded member (30) while sealing a threaded hole of the internally-threaded member (30), and a panel-contact contributing portion (42) supported by the body portion (41), and adapted to be, at least partly, closely contactable with the outer panel (16).

## Description

### TECHNICAL FIELD

The present invention relates to a cap, a multi-layered panel, and a refrigerated container.

### BACKGROUND ART

Heretofore, there has been known a refrigerated container having a thermally-insulated double-walled panel, as disclosed in the following Patent Document 1. A casing panel of the refrigerated container comprises an outer panel made of aluminum, an inner panel made of resin, and foam material as a thermal insulating material filled between the two panels. Further, a nut is fixed to the outer panel to allow a fan, a frame or the like to be fastened and fixed thereto. Typically, this nut is a crimp nut. Specifically, a through-hole is formed in the outer panel in advance, and the nut is fitted into and crimpedly fixed to the through-hole. Considering this condition where a through-hole is formed in the outer panel and the crimp nut is fixed to the through-hole, during a period when the filled foam material is in a fluid state before being solidified, a gap is sealed up with a packaging tape to prevent leakage of the foam material.
[Patent Document 1] JP 8-337285A

However, the gap-sealing operation using a packaging tape requires a lot of time and effort, due to a need for attaching the packaging tape so as not to leave any gap. Particularly, in cases where it is necessary to perform the gap-sealing operation in dozens of positions per panel, it takes much more time and effort. Moreover, a gap is likely to be left even after the gap-sealing operation.

### DISCLOSURE OF THE INVENTION

It is an object of the present invention to prevent leakage of an interlayer material provided between panels and reduce the time and effort required for sealing gaps.

According to one aspect of the present invention, there is provided a cap for attachment onto an internally-threaded member fixed to a through-hole of a panel which sandwiches an interlayer material in a fluid state or in a solidified state transformed therefrom, in cooperation with a counterpart of the panel. The cap comprises a bottomed tubular-shaped body portion adapted, upon the attachment onto the internally-threaded member, to be brought into close contact with an outer peripheral surface of the internally-threaded member while sealing a threaded hole of the internally-threaded member, and a panel-contact contributing portion supported by the body portion, and adapted, upon the attachment onto the internally-threaded member, to be at least partly brought into close contact with the panel.

### BRIEF DESCRIPTION OF DRAWINGS

FIG. 1 is a perspective view schematically showing a refrigerated container according to one embodiment of the present invention.
FIG. 2 is a vertical sectional view of the refrigerated container.
FIG. 3 is a front view of a multi-layered panel used in a casing of the refrigerated container.
FIG. 4 is a sectional view taken along the line IV-IV in FIG. 3.
FIG. 5 is a sectional view of a cap.
FIG. 6 is a sectional view of a cap according to another embodiment.

### BEST MODE FOR CARRYING OUT THE INVENTION

With reference to the drawings, the best mode for carrying out the present invention will now be specifically described.

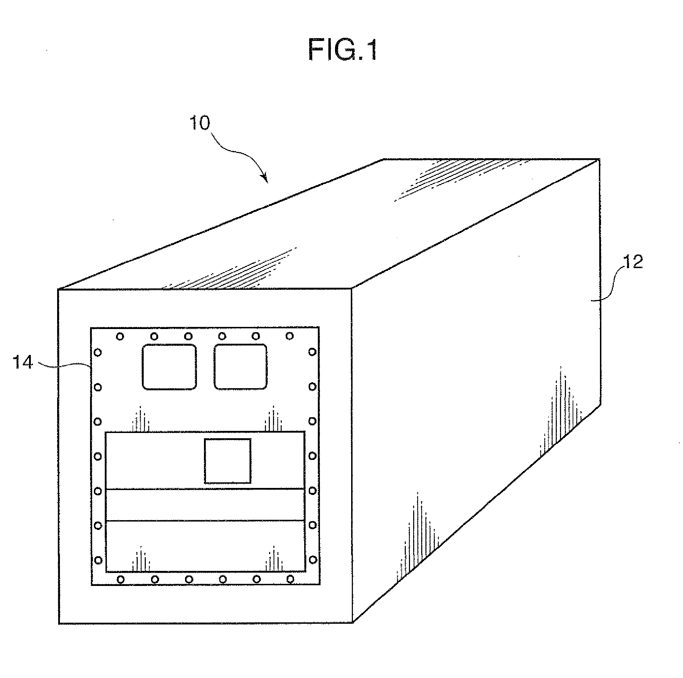

FIG. 1 shows one embodiment of a refrigerated container according to the present invention. A refrigerated container 10 according to this embodiment comprises a rectangular parallelepiped-shaped casing 12, wherein a panel arranged at one longitudinal end of the casing 12 is a multi-layered panel as one embodiment of the present invention.

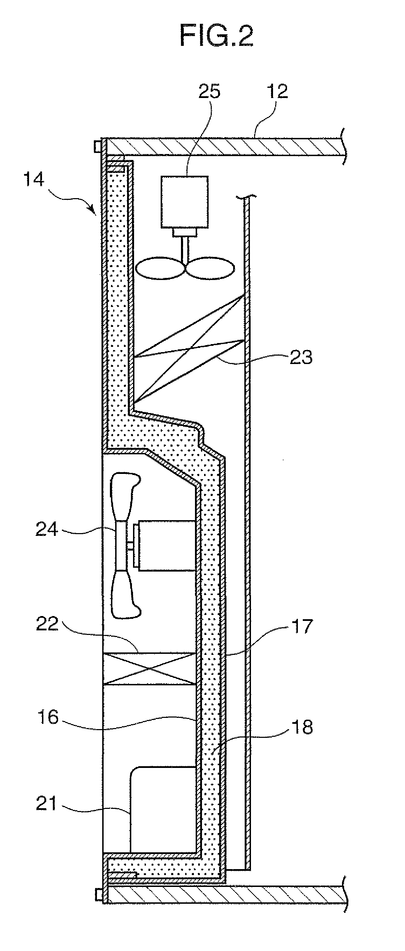

As shown in FIG. 2, the multi-layered panel 14 comprises an outer panel 16 constituting an outer wall of the casing 12, an inner panel 17 constituting an inner wall of the casing 12, and a thermal insulating material 18 as an interlayer material provided between these panels 16, 17. The outer panel 16 is made of alumina, and the inner panel 17 is made of resin. The thermal insulating material 18 is formed, for example, of a urethane foam material, and has been foamed during production of the panel. Thus, in a situation where the refrigerated container 10 is actually used, the insulating material 10 is already in a solidified state.

The refrigerated container 10 is equipped with a refrigerating unit for cooling an internal space thereof. The refrigerating unit includes, as primary component devices, a compressor 21, a condenser 22, an evaporator 23, a condenser fan 24, and an evaporator fan 25. The compressor 21, the condenser 22, and the condenser fan 24 are arranged outside the casing 12, and the evaporator 23 and the evaporator fan 25 are arranged inside the casing 12.

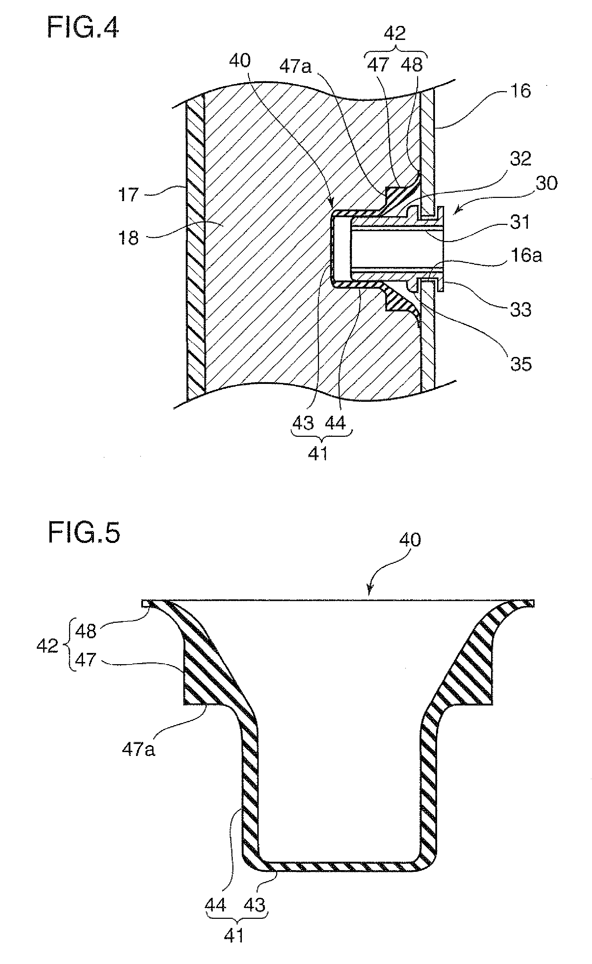

An internally-threaded member 30 (see FIG. 4) is fixed to the outer panel 16 of the multi-layered panel 14, and an externally-threaded member (not shown) is screwed with the internally-threaded member 30. The externally-threaded member is used for fixing a component device of the refrigerating unit or other component. For example, an appropriate component as this component device includes the compressor 21, the condenser 22, the condenser fan 24, and a pipe (not shown) constituting a refrigerant circuit.

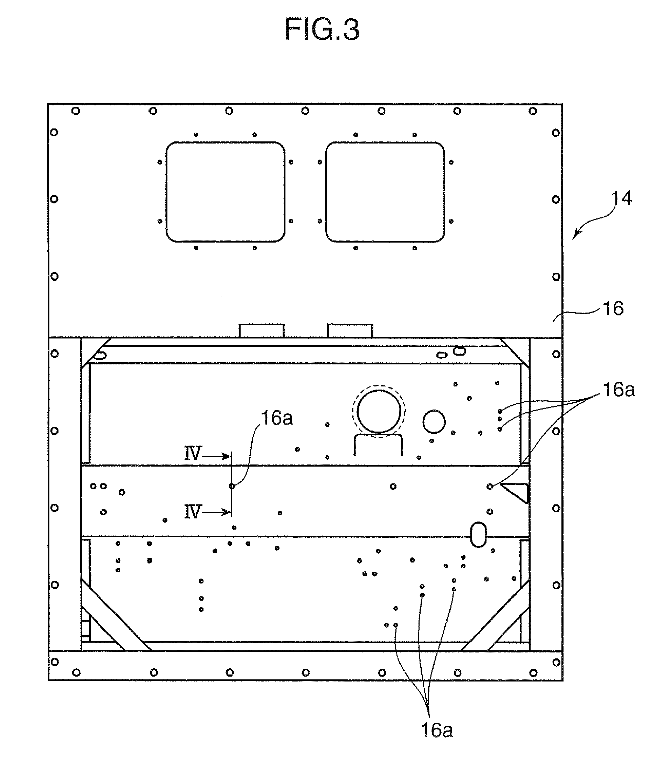

As shown in FIG. 3, the internally-threaded member 30 is fixed to the outer panel 16 while being inserted into each of a large number of through-holes 16a of the outer panel 16. As shown in FIG. 4, the internally-threaded member 30 is a member having an internal thread 31 integrally formed thereon, and composed, for example, of a crimp nut.

The internally-threaded members 30 in the respective through-holes do not necessarily have the same size, but the size of each of the internally-threaded members 30 may be appropriately selected depending on a target object to be retained. All the internally-threaded members 30 have the same structure. Thus, one of the internally-threaded members 30 will be representatively described in detail with reference to FIG. 4 which shows a sectional view taken along the line IV-IV in FIG. 3. The internally-threaded member 30 illustrated in FIG. 4 is one used for fixing the condenser 22.

The internally-threaded member 30 has a tubular portion 32 formed in a tubular shape to have an internal thread 31 on an inner surface thereof, and a flange portion 33 provided at an end of the tubular portion 32. The inner surface of the tubular portion 32 is formed as a threaded hole. The internally-threaded member 30 is inserted into the through-hole 16a of the outer panel 16 in such a manner that the flange portion 33 is located on an outward side, i.e., on an opposite side of the thermal insulating material 18 with respect to the outer panel 16.

The internally-threaded member 30 has a clamping portion 35 in an intermediate region of the tubular portion 32. The clamping portion 35 is provided as a means for clamping the outer panel 16 in cooperation with the flange portion 33 so as to fix the internally-threaded member 30 to the outer panel 16. The clamping portion 35 is formed through plastic deformation caused by axially compressing the tubular portion 32. In this manner, the internally-threaded member 30 is crimpedly fixed to the outer panel 16. A bolt (not shown) can be screwed with the internal thread 31 of the internally-threaded member 30 to retain the condenser 22 or the like.

A cap 40 is attached onto the internally-threaded member 30. The cap 40 is used for preventing the thermal insulating material 18 in a fluid state from flowing into an inner side of the internal thread 31. Further, the cap 40 prevents the thermal insulating material 18 from leaking through a gap between the internally-threaded member 30 and a peripheral edge of the through-hole 16a of the outer panel 16. The cap 40 is disposed in a space between the outer panel 16 and the inner panel 17 to divide the space into a sub-space filled with the thermal insulating material 18 and a sub-space free of the existence of the thermal insulating material 18.

The cap 40 is a single-piece product made of rubber. That is, the cap 40 is made of an elastic material. As also shown in FIG. 5, the cap 40 comprises a bottomed tubular-shaped body portion 41, and a panel-contact contributing portion 42 supported by the body portion 41. The body portion 41 includes a bottom subportion 43, and a trunk subportion 44 continuous with an outer periphery of the bottom subportion 43. The trunk subportion 44 has an inner diameter slightly less than an outer diameter of the tubular portion 32 of the internally-threaded member 30. This allows the cap 40 to be brought into close contact with the trunk subportion 32 when it is attached onto the internally-threaded member 30. Further, based on a frictional resistance generated between the trunk subportion 44 and the tubular portion 32, the cap 40 becomes free from detachment from the internally-threaded member 30.

The panel-contact contributing portion 42 is a region extending from the trunk subportion 44 of the body portion 44, while gradually increasing an inner diameter thereof. The panel-contact contributing portion 42 has a thick-walled subportion 47 and a distal end subportion 48. Preferably, the panel-contact contributing portion 42 is adapted, upon the attachment onto the internally-threaded member 30, to be free from contact with the clamping portion 35. This allows the distal end subportion 48 to reliably become free from hindrance of close contact with the outer panel 16 upon the attachment. The panel-contact contributing portion 42 may be brought into contact with the clamping portion 35 to an extent that the close contact between the distal end subportion 48 and the outer panel 16 is not hindered.

The thick-walled subportion 47 is a region formed in continuous relation to the trunk subportion 44 to protrude radially outwardly from the trunk subportion 44 so as to have a wall thickness greater than those of the trunk subportion 44 and the distal end subportion 48. The thick-walled subportion 47 is formed in a circular ring shape which has a generally triangular shape in vertical section, and has a receiving surface 47a extending in a direction approximately perpendicular to the trunk subportion 44. The receiving surface 47a is formed to receive a pushing force applied thereto from the side of the trunk subportion 44 by a jig (not shown), and comprised of an end surface of the thick-walled portion 47 on the side of the trunk subportion 44. The thick-walled portion 47 may be configured such that the direction thereof is slightly changed in response to an elastic deformation of the distal end subportion 48, or may be configured such that the direction thereof is not changed at all even if the distal end subportion 48 is elastically deformed. That is, the configuration may satisfy a condition that the receiving surface 47a intersects with the trunk subportion 44 approximately at a right angle so as to intersect with a direction of the attachment approximately at a right angle at least upon the attachment onto the internally-threaded member 30.

In an operation of attaching the cap 40 onto the internally-threaded member 30 using a tubular-shaped jig (not shown), the receiving surface 47a of the thick-walled subportion 47 can be utilized. Specifically, the receiving surface 47a can be pushed by the tubular-shaped jig to pull the trunk subportion 44 under a condition that the thick-walled subportion 47 having rigidity maintains its shape. This makes it possible to fit the cap 40 all the way while suppressing large deformation of the panel-contact contributing portion 42 itself.

The distal end subportion 48 is a region continuous with a distal edge of the thick-walled subportion 47. The distal end subportion 48 is formed in a circular ring shape having a thickness which gradually decreases in a direction from the thick-walled subportion 47 to a distal edge thereof. Further, the distal end subportion 48 is formed in a flared shape having a diameter which gradually increases toward the distal edge thereof.

The distal end subportion 48 is adapted, upon the attachment onto the cap 40, to be brought into contact with the outer panel 16 and elastically deformed in such a manner that the distal edge thereof is increased in diameter. This makes it possible to allow the distal end subportion 48 to be brought into surface contact with the outer panel 16 through an inner surface thereof, so as to effectively bring out sealability. In this state, the distal end subportion 48 located on the side of an distal edge of the cap relative to the thick-walled subportion 47 mainly undergoes elastic deformation, whereas the panel-contact contributing portion 42 itself has small elastic deformation, if any.

A type having a length greater than a protruding distance of the internally-threaded member 30 from the outer panel 16 is selected as the cap 40. Specifically, the length is set such that, when the cap 40 is attached onto the internally-threaded member 30, a gap is defined between the bottom subportion 43 of the cap 40 and an inner edge of the internally-threaded member 30 without contact therebetween. Thus, the cap 40 can be attached onto the internally-threaded member 30 in such a manner as to leave a gap between the internally-threaded member 30 and the bottom subportion 43 of the cap 40, without being affected by a variation in the protruding distance during a crimping operation, and a thickness of the outer panel 16. This makes it possible to ensure close contact between the outer panel 16 and the distal end subportion 48 of the cap 40.

In a process of producing the multi-layered panel 14, a large number of through-holes 16a are formed in the outer panel 16 at given positions, and the internally-threaded member 30 is inserted into each of the through-holes 16a. In this operation, each of the internally-threaded members 30 is inserted from the side of an outer surface of the outer panel 16. Through this operation, the flange portion 33 is positioned on the side of the outer surface of the outer panel 16. Then, each of the internally-threaded members 30 is crimped to the outer panel 16 using a given jig. Subsequently, the cap 40 is attached to each of the internally-threaded members 30. The cap 40 is attached onto a portion of the internally-threaded member 30 protruding on the side of an inner surface of the outer panel 14, i.e., attached from the side of the inner surface of the outer panel 16 (from the side of a surface of the outer panel 16 opposed to the inner panel 17).

In the operation of attaching the cap 40, the receiving surface 47a of the thick-walled subportion 47 is pushed using a given jig to cap the body portion 41 onto the tubular portion 32 of the internally-threaded member 30. During this operation, the trunk subportion 44 of the cap 40 can be fitted onto the tubular portion 32 while being expanded radially outwardly by the internally-threaded member 30, to ensure close contact between the trunk subportion 44 of the cap 40 and the tubular portion 32 of the internally-threaded member 30. Further, the receiving surface 47a extending in a direction approximately perpendicular to a direction of the attachment onto the internally-threaded member 30 can be pushed. This makes it possible to easily apply to the cap 40 a force greater than a frictional resistance between the trunk subportion 44 and the tubular portion 32. Then, when the cap 40 is brought into contact with the outer panel 16, the distal end subportion 48 is elastically deformed to thereby ensure close contact between the distal end subportion 48 and the outer panel 16.

After the caps 40 are attached onto respective ones of the internally-threaded members 30 in the above manner, the inner panel 17 is assembled to the outer panel 16. In this operation, the two panels 16, 17 are assembled together to allow the cap 40 to be located between the two panels 16, 17. Then, a pre-foam thermal insulating material 18 in liquid form is poured into a space between the two panels 16, 17. After an elapse of a given time after the thermal insulating material 18 is charged between the two panels 16, 17, the thermal insulating material 18 is foamed and solidified. Through the above process, the multi-layered panel 14 is competed.

As described above, according to this embodiment, the cap 40 has the bottomed tubular-shaped body portion 41, so that the cap 40 can be attached onto the internally-threaded member 30 only by fitting the bottomed tubular-shaped body portion 41 onto the internally-threaded member 30. This makes it possible to reduce the time and effort required for the attachment of the cap 40. Further, the cap 40 has the panel-contact contributing portion 42 adapted to be partly brought into close contact with the outer panel 16, so that it is able to prevent the thermal insulating material 18 in a fluid state from flowing into the threaded hole, and a gap between the internally-threaded member 30 and the outer panel 16. This makes it possible to reliably prevent leakage of the thermal insulating material 18 even if it is in the fluid state.

Further, in this embodiment, the cap 40 is made of an elastic material, so that the close contact with the internally-threaded member 30 can be easily ensured. In addition, the distal end subportion 48 of the cap 40 is brought into close contact with the outer panel 16 while being elastically deformed, so that the close contact between the cap 40 and the outer panel 16 can be ensured primarily by means of an elastic force of the distal end subportion 48. In the state when the panel-contact contributing portion 42 is in contact with the outer panel 16, the distal end subportion 48 located on the side of the distal edge of the cap relative to the thick-walled subportion 47 mainly undergoes elastic deformation, whereas the thick-walled subportion 47 itself having rigidity is less likely to be elastically deformed, so that it is able to prevent the panel-contact contributing portion 42 from undergoing unintended deformation in its entirety. This makes it possible to reduce a thickness of the distal end subportion 48 so as to allow the distal end subportion 48 to have a more elastically deformable configuration.

Further, in this embodiment, the thick-walled subportion 47 has the receiving surface 47a extending in a direction approximately perpendicular to the trunk subportion 44, so that, during the operation of attaching the cap 40, the receiving surface 47a can be pushed by applying a force thereto in a direction along the trunk subportion 44, so as to attach the cap 40 onto the internally-threaded member 30. This makes it possible to utilize the thick-walled subportion 47 during the operation of attaching the cap 40 onto the internally-threaded member 30, to thereby fit the cap 40 onto the internally-threaded member 30 in a reliable manner, while preventing the occurrence of unintended deformation in the relatively easily deformable distal end subportion 48.

Further, in this embodiment, at least one of the large number of internally-threaded members 30 attached to the multi-layered panel 14 is composed of a crimp nut. Even if there is a gap between the crimp nut and the outer panel 16, it is able to prevent the thermal insulating material in the fluid state from leaking through the gap. In addition, even if a variation in length of the internally-threaded member 30 occurs during the operation of crimpingly fixing the crimp nut to the outer panel 16, the variation is absorbed by the bottomed tubular-shaped body portion 41. This makes it possible to avoid its influence on a level of close contact between the distal end subportion 48 and the outer panel 16.

The present invention is not limited to the above embodiment, but various changes and modifications may be made therein without departing from the sprit and scope of the present invention. For example, although a crimp nut adapted to be crimpedly fixed to the outer panel 16 is shown as the internally-threaded member 30, the present invention is not limited thereto. For example, the internally-threaded member 30 may be a rivet-type member adapted to be fixed to the outer panel 16 in such a manner as to be bitingly engaged therewith by pressing. The point is that the internally-threaded member 30 has an internal thread, wherein it is capable of being fixed to the outer panel 16 while being inserted into the through-hole 16a of the outer panel 16.

Although the above embodiment has been described based on one example where the cap 40 itself is made of an elastic material, the present invention is not limited thereto. For example, the cap may be configured such that only the distal end subportion 48 is made of an elastic material, wherein this distal end subportion 48 is fixedly attached to the thick-walled subportion 47 made of a material other than an elastic material, or may be configured such that the panel-contact contributing portion 42 is made of an elastic material, wherein this panel-contact contributing portion 42 is fixedly attached to the body portion 41.

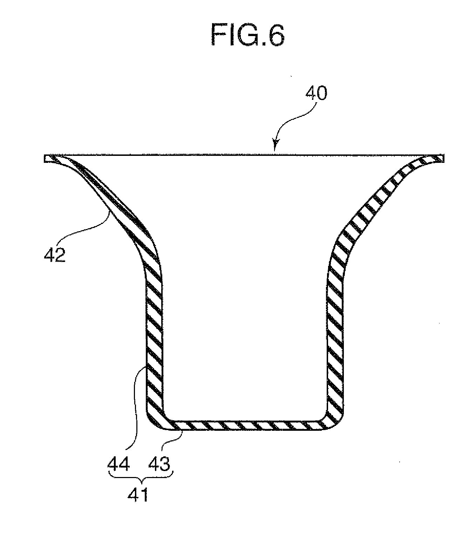

Although the above embodiment has been described based on one example where the panel-contact contributing portion 42 has a thick-walled subportion, the present invention is not limited thereto. As shown in FIG. 6, the panel-contact contributing portion 42 may be generally formed in a flared shape. This panel-contact contributing portion 42 has a diameter which gradually increases in a direction away from the body portion 41, and a thickness which gradually decreases toward a distal edge thereof. This type of cap 40 may be used, for example, in cases where the panel-contact contributing portion 42 has a thickness free from the occurrence of unintended deformation, in its entirety. In this configuration, when the cap 40 is brought into contact with the outer panel 16 upon attachment onto the internally-threaded member 30, the panel-contact contributing portion 42 is deformed in its entirety, and an inner surface of a distal end thereof is brought into close contact with the outer panel 16. This makes it possible to ensure close contact between the cap 40 and the outer panel 16. In addition, the panel-contact contributing portion 42 is expanded in a flared pattern, so that, even in cases where the cap is attached onto the internally-threaded member 30 having the protruding clamping portion 35, such as a crimp nut, an interference with the clamping portion 35 can be avoided.

A summary of the above embodiment will be descried below.

(1) The above embodiment discloses a cap having a bottomed tubular-shaped body portion. Thus, the cap can be attached onto an internally-threaded member only by fitting the bottomed tubular-shaped body portion onto the internally-threaded member. This makes it possible to reduce the time and effort required for the attachment of the cap. Further, the cap has a panel-contact contributing portion adapted to be at least partly brought into close contact with a panel, so that it is able to prevent an interlayer material in a fluid state from flowing into a threaded hole of the internally-threaded member, and a gap between the internally-threaded member and the panel. This makes it possible to reliably prevent leakage of the interlayer material even if it is in the fluid state.

(2) Preferably, in the above cap, at least the panel-contact contributing portion is made of an elastic material. In this case, close contact between the cap and the panel can be ensured by means of an elastic force of the panel-contact contributing portion.

(3) Preferably, the panel-contact contributing portion is formed in a shape having a diameter which gradually increases in a direction away from the body portion. In this case, when the panel-contact contributing portion is brought into contact with the panel upon the attachment onto internally-threaded member, it is elastically deformed in such a manner as to be expanded in a flared pattern. This makes it possible to ensure close contact between the cap and the panel.

(4) The panel-contact contributing portion may have a distal end subportion adapted to be brought into close contact with the panel, and a thick-walled subportion formed between the distal end subportion and the body portion to have a wall thickness greater than that of the distal end subportion. In this case, in a state when the distal end subportion is in close contact with the panel, the distal end subportion mainly undergoes elastic deformation, whereas the thick-walled subportion itself is less likely to be elastically deformed, so that it is able to prevent the panel-contact contributing portion from undergoing unintended deformation. This makes it possible to reduce a thickness of the distal end subportion so as to allow the distal end subportion to have a more elastically deformable configuration.

(5) Preferably, the thick-walled subportion has a receiving surface which is adapted, upon the attachment onto the internally-threaded member, to extend in a direction approximately perpendicular to a tubular-shaped trunk subportion of the body portion. In this case, when the cap is attached onto the internally-threaded member, the thick-walled subportion is pushed in a direction along the trunk subportion. During this operation, the receiving surface extending in a direction approximately perpendicular to the trunk subportion is pushed. This makes it possible to utilize the thick-walled subportion during the operation of attaching the cap onto the internally-threaded member, to thereby fit the cap onto the internally-threaded member in a reliable manner, while preventing the occurrence of unintended deformation in the relatively easily deformable distal end subportion.

(6) The internally-threaded member may be a crimp nut. In this case, the cap can be used for preventing the interlayer material in the fluid state from leaking through a gap between the crimp nut and the panel.

(7) The above embodiment discloses a multi-layered panel wherein an interlayer material in a fluid state or in a solidified state transformed therefrom is provided between a pair of panels. The multi-layered panel comprises an internally-threaded member fitted in a through-hole formed in one of the pair of panels, and the above cap, wherein the cap is attached onto the internally-threaded member, in a position between the pair of panels. In this multi-layered panel, the cap can be brought into close contact with the panel to prevent the interlayer material in the fluid state from flowing into the threaded hole, and a gap between the internally-threaded member and the panel. This makes it possible to reliably prevent leakage of the interlayer material even if it is in the fluid state.

(8) The above embodiment discloses a refrigerated container comprising a casing at least partly made up of the above multi-layered panel, wherein an externally-threaded member is screwed with the above internally-threaded member to retain a component device of a refrigerating unit.

(9) In the above embodiment, a method of producing a multi-layered panel wherein an interlayer material in a fluid state or in a solidified state transformed therefrom is provided between a pair of panels. The method comprises the steps of: attaching the above cap onto an internally-threaded member fitted in one of the panels which is formed with a through-hole; assembling the one panel and the other panel together in such a manner that the cap is positioned between the assembled panels; and charging an interlayer material in a fluid state, between the assembled panels, and inducing foaming of the interlayer material. In this production method, the cap can be attached without forming a gap between the cap and the internally-threaded member fitted in the one panel formed with the through-hole. This makes it possible to prevent leakage of the interlayer material in the fluid state. In addition, the cap having the bottomed tubular-shaped body portion can be easily attached to the internally-threaded member. This makes it possible to suppress complexity in production process for the multi-layered panel.

As described above, the above embodiment makes it possible to prevent leakage of an interlayer material provided between panels and reduce the time and effort required for sealing gaps.

## Claims

1. A cap for attachment onto an internally-threaded member fixed to a through-hole of a panel which sandwiches an interlayer material in a fluid state or in a solidified state transformed therefrom, in cooperation with a counterpart of the panel, comprising:
a bottomed tubular-shaped body portion adapted, upon the attachment onto the internally-threaded member, to be brought into close contact with an outer peripheral surface of the internally-threaded member while sealing a threaded hole of the internally-threaded member; and
a panel-contact contributing portion supported by the body portion, and adapted, upon the attachment onto the internally-threaded member, to be at least partly brought into close contact with the panel.

2. The cap as defined in claim 1, wherein at least the panel-contact contributing portion is made of an elastic material.

3. The cap as defined in claim 2, wherein the panel-contact contributing portion is formed in a shape having a diameter which gradually increases in a direction away from the body portion.

4. The cap as defined in claim 1 or 2, wherein the panel-contact contributing portion has a distal end subportion adapted to be brought into close contact with the panel, and a thick-walled subportion formed between the distal end subportion and the body portion to have a wall thickness greater than that of the distal end subportion.

5. The cap as defined in claim 4, wherein the thick-walled subportion has a receiving surface which is adapted, upon the attachment onto the internally-threaded member, to extend in a direction approximately perpendicular to a tubular-shaped trunk subportion of the body portion.

6. The cap as defined in any one of claims 1 to 5, wherein the internally-threaded member is a crimp nut.

7. A multi-layered panel wherein an interlayer material in a fluid state or in a solidified state transformed therefrom is provided between a pair of panels, comprising:
an internally-threaded member fitted in a through-hole formed in one of the pair of panels; and
the cap as defined in any one of claims 1 to 6, the cap being attached onto the internally-threaded member, in a position between the pair of panels.

8. A refrigerated container comprising a casing at least partly made up of the multi-layered panel as defined in claim 7, wherein an externally-threaded member is screwed with the internally-threaded member to retain a component device of a refrigerating unit.

9. A method of producing a multi-layered panel wherein an interlayer material in a fluid state or in a solidified state transformed therefrom is provided between a pair of panels, comprising the steps of:
attaching the cap as defined in any one of claims 1 to 6, onto an internally-threaded member fitted in one of the panels which is formed with a through-hole;
assembling the one panel and the other panel together in such a manner that the cap is positioned between the assembled panels; and
charging an interlayer material in a fluid state, between the assembled panels, and inducing foaming of the interlayer material.
